**Europäisches Patentamt**

(19) **European Patent Office** (11) Publication number: **0 002 072**

**Office européen des brevets** **B1**

(12) **EUROPEAN PATENT SPECIFICATION**

(45) Date of publication of patent specification: **25.08.82** (51) Int. Cl.³: **C 02 F 1/42** //B01J41/12, B01J47/14, B01D35/00

(21) Application number: **78101440.2**

(22) Date of filing: **22.11.78**

(54) Removal of bacteria from liquids and apparatus therefor.

(30) Priority: **23.11.77 US 854306**

(43) Date of publication of application:
**30.05.79 Bulletin 79/11**

(45) Publication of the grant of the patent:
**25.08.82 Bulletin 82/34**

(84) Designated Contracting States:
**DE FR**

(56) References cited:
**DE - A - 2 233 002**
**FR - A - 2 216 230**
**GB - A - 1 305 373**
**US - A - 3 836 458**

(73) Proprietor: **Rohm and Haas Company**
**Independence Mall West**
**Philadelphia, Pennsylvania 19105 (US)**

(72) Inventor: **Slejko, Frank Luciano**
**116-7 Van Buren Road**
**Voorhees N.J. 08043 (US)**

(74) Representative: **Deufel, Paul, Dr. et al,**
**Patentanwälte Müller-Boré.Deufel Schön.Hertel**
**Siebertstrasse 4**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Removal of bacteria from liquids and apparatus therefor

This invention is concerned with the removal of bacteria and apparatus therefor. The technical field to which the invention relates is the purification of liquids, particularly water.

Removal of bacteria from liquids such as water, is generally not a problem in more developed areas of the world or in and around large cities. In these instances, conventional mass purification infection systems techniques such as those involving chlorination, ozonation, or ultraviolet treatment are effective. These mass techniques are not practical for small domestic applications such as for treatment of private well water.

It is known that macroreticular anion exchange resins can effectively remove bacteria from liquids such as water or during processing of foods in a food plant. It is also known that such macroreticular anion exchange resins may have microbiocides physically or chemically bound thereto and that bacteria may be removed and destroyed using such ion exchange resins with microbiocides.

The use of ion exchange resins, with or without microbiocides,to remove bacteria from liquids has been severely limited by the fact that there has been no way to determine when the capacity of the resin to remove bacteria has been exhausted. Thus removal of bacteria using such resins has been limited because, after the capacity of such resins to remove bacteria has been substantially exhausted, the liquid effluent from the ion exchange column will contain bacteria and this will normally be unknown to the user.

French Patent 22 16 230 (equivalent to British Patent 1 404 267) discloses apparatus for purifying water including a bed of activated carbon for removing bacteria in pressure-tight relationship with a filter of approximately 5 $\mu$m pore size. In use, the filter clogs because of solids present in the water, to reduce the flow through the filter, and the bed of activated carbon is chosen such that this blocking occurs before the activated carbon bed is exhausted. Thus for water with a given solids content and bacteria content bacteria are removed by the activated carbon, and an indication is given of when the bed is exhausted. However, different filter combinations are required depending on the water to be treated.

British Patent 1 107 768 discloses water purifying apparatus for removing pyrogens from a water supply so that the water, after treatment, can be used for medical purposes such as intravenous injections. The British Patent discloses an apparatus for purifying water which includes an ion exchange column and a membrane filter. The function of the ion exchange column is not stated but the specification states that the function of the membrane filter is to protect the ion exchange resin and the effluent from micro-organisms present in the feed water. The apparatus disclosed fails to provide any means whereby exhaustion of the ion exchange resin is indicated. Indeed, the membrane filter is arranged so that the influent passes through the membrane filter before passing through the ion exchange resin.

British Patent 1 305 373 and an article entitled "Preparation of Biologically Pure Water by Ion Exchange", Saunders et al; Ion Exchange in the Process Industry Conference; London Society of Chemical Industries; London; July 16—18, pages 410—415, disclose the purification of water to render it suitable for all purposes in medicine and pharmacy. This article teaches the removal of pyrogenic substances from water by passing the water through a pre-purifier mixed resin bed followed by passing the water through a macroreticular ion exchange resin and then through a series of submicron (0.22 $\mu$m) membrane filters.

This article fails to teach the necessity for a connection between the ion exchange resin and the membrane filter so pressure tight as to reduce liquid flow if the filter becomes clogged. The article also states that the final membrane filter is not essential to give sterility but may be used as an additional precaution against micro-organisms and as a barrier to prevent resin fines from passing into the effluent.

This prior art thus either fails to recognize the necessity for an indicator to advise the user when the capacity of the bed has been exhausted, or, in the case of French Patent 22 16 230, provides an indicator which depends on the concentration of solids in the liquid which is not directly correlated to the bacteria content of the liquid.

This invention provides apparatus for removal of bacteria from a liquid medium comprising a container for an ion exchange resin said container having an inlet an and outlet for liquid, a bed of macroreticular anion exchange resin disposed within said container, and, disposed at the side of the ion exchange resin bed intended to be downstream side in use, a filter having a submicron average pore size having an average diameter of at least 0,03 $\mu$m and a maximum pore diameter of 1 $\mu$m, characterized in that the ion exchange resin has an average pore diameter of 8000 to 500.000 nm and said filter is in a pressure tight association with the resin bed sufficient to prevent leakage of water caused by built-up of internal pressure when the filter is blocked to the flow of water by collected bacteria leaking from the bed when the latter becomes exhausted.

This invention also provides a process for the removal of bacteria from a liquid containing them comprising passing the liquid through a bed of macroreticular anion exchange resin capable of removing bacteria from the liquid and passing the effluent from the bed through a submicron average pore size filter having an average pore diameter of at least 0,03 $\mu$m and a maximum pore diameter of 1 $\mu$m, characterized in that the resin has an average pore diameter of 8000 to 500.000 nm, and the filter and the bed are maintained in pressure-tight relationship, and the filter and the resin are such that when the capacity of the resin for removing bacteria becomes exhausted bacteria are passed to the filter eventually to block it, and raise the pressure to such a level as substantially to reduce the flow of liquid leaving the filter to provide an indication for discontinuing the passage of liquid to the bed.

The apparatus and process of this invention have the advantage that not only is exhaustion of the resin indicated but also that this is done in such a way as to provide a safety precaution against downstream contamination by bacteria.

One preferred embodiment of apparatus of this invention is shown in the accompanying drawings wherein:

Fig. 1 is a side elevation, partially in section, of the embodiment;

Fig. 2 is a magnified fragmentary side elevation of the area encircled in Fig. 1;

Fig. 3 is a magnified fragmentary side elevation of the area encircled in Fig. 1 and showing build up of bacteria on the submicron filter and consequential build up of back pressure.

Fig. 4 is a composite graph which demonstrates that as bacteria leaks through the resin, there is a build up in back pressure. The abscissa in Fig. 4 is expressed in terms of thousands of gallons per cubic foot of resin.

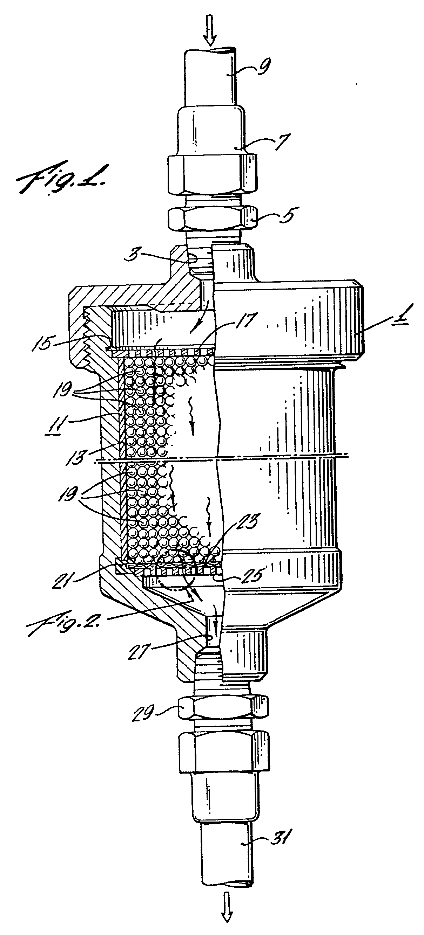

Referring now to Fig. 1, a canister 1 is in threaded connection at its inlet 3 with a male threaded member 5 which is part of a fitting 7 which is connected to a water pipe 9. The canister 1 has a removable cartridge generally indicated as 11. The wall 13 of the cartridge 11 is of plastic although other materials would be suitable. The cartridge 11 is retained tightly in place within the canister 1 by a split ring 15. Other retention means could be used. A perforated plate 17 is part of the cartridge 11 and is below the split ring 15. In use perforated plate distributes the water, which enters the canister 1, evenly above a bed of macroreticular anion exchange resin 19 in the canister 1. Any suitable liquid distributer may be used. At the end of the wall 13 remote from the perforated plate 17 is a sealing ring 21 which is an integral part of a submicron filter 23. The sealing ring 21 serves to maintain a pressure tight connection between the submicron filter 23 and the remainder of the cartridge 11. Any suitable sealing means to form a sufficiently pressure tight connection could be used in place of the sealing ring 21. Below the submicron filter 23 is a distributer plate 25 which will evenly distribute liquid effluent from the cartridge 11. The end of the canister 1, remote from the inlet 3, defines an outlet 27 through which the effluent flows after leaving the cartridge 11. Thereafter, the cartridge 11 is connected to a threaded fitting 29 which in this case is connected to a domestic water pipe 31.

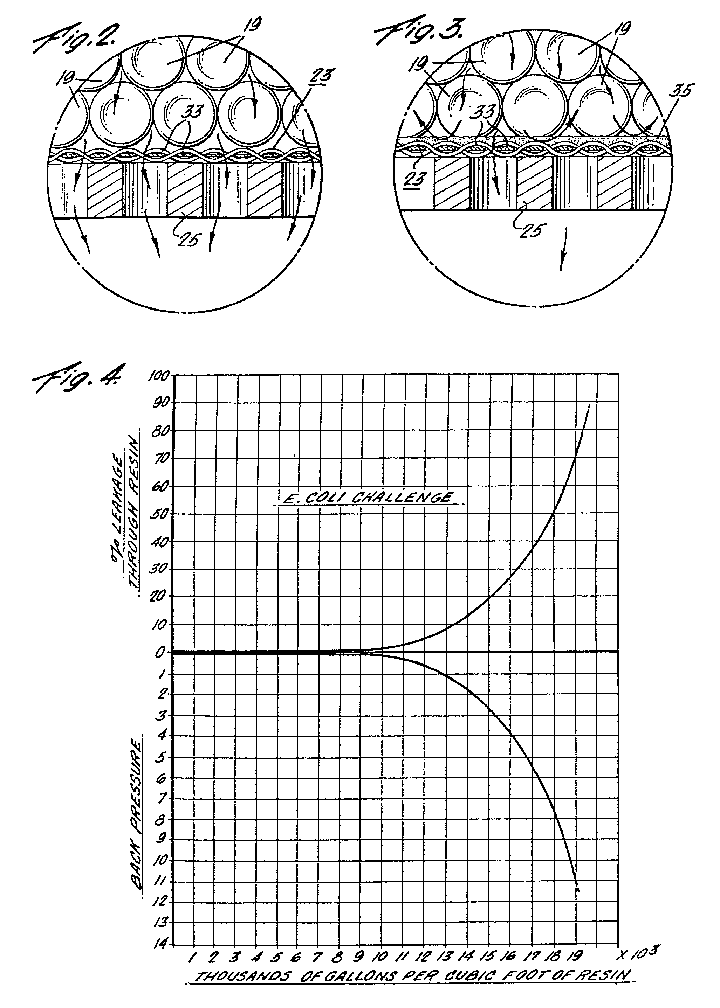

Fig. 2, which is a magnified fragmentary side elevational view of the area encircled in Fig. 1, shows how water flows in contact with the ion exchange resin 19 through the submicron filter 23. In this case the submicron filter 23 is composed of a series of layers of fibers 33 through which the water flows. Alternatively, the submicron filter may be a thin perforated sheet of porous polymer. The effluent from the submicron filter 23 is distributed evenly by distributer plate 25.

Fig. 3, is identical to Fig. 2 except that Fig. 3 shows a bacterial layer 35 which has clogged the submicron filter 23 and has resulted in an increase in back pressure causing the modified liquid flow indicated in the Figure.

Fig. 4, is a graph which shows the increase in back pressure as the percentage of bacteria leaking through the ion exchange resin increases. The data for plotting the graph of Fig. 4 is taken from the data presented in the Examples and expanded to reflect thousands of gallons per cubic foot of resin.

The liquid, such as from a household water supply system, enters the canister 1 at the inlet 3 and then flows through a distribution device in this case the perforated plate 17, into contact with the ion exchange resin 19 which is disposed within the cartridge 11. Bacteria are removed from the liquid, which now substantially bacteria free, flows through the submicron filter 23.

When the capacity of the ion exchange resin 19 for removing bacteria is substantially exhausted, bacteria will be in the liquid leaving the resin 19 and this bacteria will be collected on the submicron filter 23 which will, within a short period of time, become clogged.

As the submicron filter 23 becomes clogged, the flow of liquid through the submicron filter 23 will diminish noticeably (Fig. 3). This indicates to the user that the capacity of the resin to remove bacteria has been exhausted and that no additional substantially bacteria-free water can be obtained from the system.

If desired, a pressure sensing device may be disposed in the water line preceding the flow of water into the canister for treatment. In this way, increases in back pressure will also be detectable by reading a gauge as well as by observing the flow of liquid which has passed through the submicron filter.

It is important that the submicron filter be connected or associated with the liquid leaving the resin in such a pressure tight manner that the connection between the resin and the submicron filter will withstand the increased pressure of the bacteria-containing liquid after the resin has become exhausted and the submicron filter has clogged. The use of such a pressure tight connection will prevent bacteria containing liquid from flowing around the filter and contaminating the liquid which the user receives.

The submicron filter may be connected to the cartridge in other suitable ways such as by being disposed within the inner wall of the cartridge and having a peripheral gasket to give a sufficiently pressure tight fit of the filter inside the cartridge. The gasket may be an integral part of the filter element or may be a separate member.

The end of the cartridge remote from the inlet may be threaded and the filter element may be disposed in a threaded member which would mate with threads on the cartridge.

The submicron filter may also be connected to the apparatus by means of a bacteria-impermeable adhesive. If desired, a combination of a gasket and a bacteria impermeable adhesive may be used.

When the apparatus is intended for household use, both the inlet and outlet portions of the canister containing the cartridge may be threaded so that the canister may be inserted into a domestic water supply line or to a tap itself.

Other means of connections to the water tap may be used such as snap fitting over the tap outlet or by an elastic connection. Alternative methods will be apparent to those skilled in the art.

Preferred submicron filters have an average pore diameter from 0.22 to 0.45 $\mu$m.

If the average pore size of the submicron filter is less than about 0,03 $\mu$m, the flow of liquid through the submicron filter might be adversely effected. A pore size greater than 1 $\mu$m should not be used because such large pores would permit bacteria to flow through the filter.

The submicron pore size selected will ultimately be governed by the desired rate of flow of the liquid through the submicron filter and the dimension of the ion exchange column through which the liquid passes.

The dimensions of the ion exchange column will vary depending upon the desired total flow rate of the system and the desired life time of the unit. For example, by increasing the diameter of the column while keeping the height of the column constant, the throughput will be increased. If however, the height of the unit is increased and the diameter kept constant, the lifetime of the unit will be increased.

Any large pore macroreticular anion exchange resin which is capable of physically or chemically removing bacteria may be used in practicing this invention. Among the large pore macroreticular anion exchange resins which may be used are: AMBERSORB XE—352, a large-pore styrenedivinylbenzene copolymer containing a trimethylammonium chloride functionality; AMBERSORB XE—342, which has the same composition as XE—352, except that about 1% Agel is deposited within the pores of the resin. AMBERSORB is a trademark of Rohm and Haas Co., Phila., Pa. 19105. Other large pore macroreticular anion exchange resins capable of removing bacteria are known and are useful in the invention.

The preferred anion exchange macroreticular resins possess an average pore size from 1000 nm to 40000 nm with the most preferred range being between 2500 nm and 25000 nm.

Suitable macroreticular anion exchange resins which can be used in practicing this invention are those disclosed in U.S. Patent Numbers 3,454,493; 3,531,463; 3,663,467; and 3,816,355. Additionally, the anion exchange resin may contain chemically or physically bound microbiocides for example silver chloride, or combinations thereof as set forth in Belgian Patent Specification 855,910. The disclosure of these patent specifications are hereby incorporated into this specification by reference.

If desired, the column may have activated carbon present to improve the odor and taste of the liquid being passed through the column. Generally, any activated carbon suitable for liquid phase adsorption may be used and such activated carbons are well known in the art.

The following Examples describes one process of the invention.

Example 1

A bacterially-contaminated liquid medium is prepared daily in the following manner. Two tubes containing E. coli bacteria (2 billion cells per tube) and 1300 milliliters of soil bacteria (750 grams of soil per two liters of deionized water mixed together and filtered) are added to 70 liters of deionized water which contains 25 parts per million hardness ions and 20 parts per million alkalinity ($CaCO_3$ equivalents). After mixing, the solution is passed through a sediment filter and is thereafter ready for use. Additional bacterially contaminated samples necessary to make up the volumes set forth in the Examples are prepared in the same manner.

The aforesaid liquid medium, which constitutes the influent has the following analysis:

**0 002 072**

TABLE I

Liquid Medium Sample Analysis

| Suspended Solids | 13 ppm |
|---|---|
| Total Dissolved Solids | 190 ppm |
| Total Organic Carbon | 25 ppm |
| Turbidity | None |
| Free $Cl_2$ | 0.02 ppm |
| pH | 9.1 |

The Example has been deliberately designed so that leakage of bacteria would take place from the ion exchange column in order to demonstrate the efficacy of the system to indicate that such leakage is occurring while protecting the downstream side from leakage of bacteria.

An 18" glass column, 1" in diameter, is packed with 230 milliliters of AMBERSORB XE—352 macroreticular anion exchange resin. The inlet to the column is restricted and is connected by means of a pressure tight rubber tube to a standard laboratory pump. The outlet from the column is connected via a pressure tight rubber tube to a submicron membrane filter having an average pore diameter of 0,45 $\mu$m. Liquid medium samples are pumped from a storage vessel through the column at a flow rate of 220 to 240 milliliters per min. This corresponds to a bulk flow rate of 28,5 l per min. per 28 dm³ of resin. In order to measure increases in the back pressure, a pressure gauge is inserted at the inlet to the glass column via a tee fitting.

The Examples are conducted over ten days. The same column and same filter are used throughout the ten days without any treatment. At the end of each day and on weekends, the unit is allowed to stand, as is, and is again started up at the beginning of the next business day. Fresh liquid medium is prepared as above described and is added to the liquid medium storage vessel as is needed to make up quantities of liquid medium sample required for the test. Periodically, the apparatus is shut down and samples are removed from the effluent from the resin column and from the effluent from the filter after being passed through the resin column. The total amount of bacteria in all effluents are then measured using standard means and the amount of E. coli bacteria are also measured using standard means. The results are expressed in Table II.

TABLE II

| | | Bacteria Cells Per 100 Milliliters | | Bacteria Cells Per 100 Milliliters | | | |
| | | | | Effluent From Ion Ex. Resin | | Effluent From Submicron Filter | |
| Column Thruput Vol. in Liters | Back Pressure N/m² | Influent | | | | | |
| | | E. Coli | Total Bacteria | E. Coli | Total Bacteria | E. Coli | Total Bacteria |
| --- | --- | --- | --- | --- | --- | --- | --- |
| 115 | 0 | 33,000,000 | 36,500,000 | 17,500 | 20,400 | 0 | 0 |
| 200 | 0 | 25,000,000 | 42,000,000 | 125,000 | 150,000 | 0 | 0 |
| 290 | 0 | 23,000,000 | 36,000,000 | 630,000 | 880,000 | 0 | 0 |
| 370 | 13792 | 21,000,000 | 16,600,000 | 2,350,000 | 3,590,000 | 0 | 0 |
| 480 | 20688 | 16,000,000 | 47,500,000 | 3,100,000 | 3,540,000 | 0 | 2,750 |
| 580 | 75856 | 22,000,000 | 39,000,000 | 16,100,100 | 45,600,000 | 0 | 11,600 |

0 002 072

The foregoing Table demonstrates that, not only is the apparatus and process according to this invention effective in removing bacteria, but when the ion exchange resin is substantially exhausted, leakage of bacteria from the resin is detected by the increase in back pressure which is a result of the bacteria having been collected on the submicron filter and the submicron filter being substantially clogged with bacteria so that the back pressure will increase and demonstrate to the user that the unit must be replaced.

Example 2

A canister 175 mm high and 75 mm in diameter is packed with a cartridge containing 0.03 cubic feet of AMBERSORB XE—352 macroreticular anion exchange resin. A submicron filter having an average pore diameter of 0.45 $\mu$m is placed at the bottom of the resin bed in a pressure tight manner to prevent leakage around the filter when the pressure increases. The canister is then plumbed into a cold water line and is used to provide bacteria free cooking and drinking water. The unit has a maximum service flow rate of 213 l per min. and an expected life time of 1900 l. At the point of substantial exhaustion, the back pressure becomes so great that the flow of water through the unit is reduced to a trickle. The cartridge has a life expectancy of approximately 100 days based on a usage of 19 l per day for an average household (cooking and drinking water only).

The apparatus and process of this invention is not only useful when statically placed in a water line, but is also useful to provide a portable means for obtaining substantially bacteria-free water. For example, when sterilizing soft contact lenses, it is desirable that the water used be a bacteria-free water. Soft contact lenses are commonly prepared for the following day's use by heating them in water to a temperature of between about 66 and 71°C. This temperature will kill most, but not all, of the bacteria present. It is clearly advisable to minimise the level of bacterial contamination of the water used and the invention provides a convenient method and apparatus for achieving this and it is particularly convenient to attach, for this purpose, apparatus of this invention to the outlet of a squeeze water bottle.

Claims

1. Apparatus for removal of bacteria from a liquid medium comprising a container for an ion exchange resin said container having an inlet and an outlet for liquid, a bed of macroreticular anion exchange resin disposed within said container and, disposed at the side of the ion exchange resin bed intended to be the downstream side in use, a filter having a submicron average pore size having an average diameter of at least 0,03 $\mu$m and a maximum pore diameter of 1 $\mu$m, characterized in that the ion exchange resin (19) has an average pore diameter of 8000 to 500,000 nm, and said filter (23) is in a pressure-tight association with resin bed (19) sufficient to prevent leakage of water caused by build-up of internal pressure and the filter (23) is blocked to the flow of water by collected bacteria leaking from the bed (19) when the latter becomes exhausted.

2. Apparatus as claimed in claim 1 wherein the filter has an average pore diameter of from 0,22 to 0,45 $\mu$M.

3. Apparatus as claimed in claim 1 or 2 wherein the ion exchange resin has an average pore diameter of 10.000 nm to 400.000 nm.

4. Apparatus as claimed in any preceding claim wherein the container also contains a bed of activated carbon.

5. A process for the removal of bacteria from a liquid containing them comprising passing the liquid through a bed of macroreticular anion exchange resin capable of removing bacteria from the liquid and passing the effluent from the bed through a submicron average pore size filter having an average pore diameter of at least 0,03 $\mu$m and a maximum pore diameter of 1 $\mu$m, characterized in that the resin has an average pore diameter of 8000 to 500.000 nm, and the filter and the bed are maintained in pressure-tight relationship, and the filter and the resin are such that when the capacity of the resin for removing bacteria becomes exhausted bacteria are passed to the filter eventually to block it, and raise the pressure to such a level as substantially to reduce the flow of liquid leaving the filter to provide an indication for discontinuing the passage of liquid to the bed.

6. A process as claimed in claim 5 wherein the filter has an average pore diameter size for 0,22 to 0,45 $\mu$m.

7. A process as claimed in claim 5 or 6 wherein the liquid is passed through activated carbon prior to being passed through the filter.

8. A process as claimed in any of claims 5 to 7 wherein the ion exchange resin has an average pore diameter of 10.000 nm to 400.000 nm.

Revendications

1. Appareil pour éliminer les bactéries d'un milieu liquide comprenant un récipient pour une résine échangeuse d'ions, ledit récipient ayant une entrée et une sortie de liquide, un lit de résine échangeuse d'anions macroréticulaire disposé dans ledit récipient et, disposé sur le côté du lit de résine échangeuse d'ions destiné à constituer le côté d'aval lors de l'emploi, un filtre ayant une taille des pores moyenne submicronique ayant un diamètre moyen des pores d'au moins 0,03 $\mu$m et un diamètre maximal des pores de 1 $\mu$m, caractérisé en ce que la résine échangeuse d'ions (19) a un diamètre moyen des pores de 8.000 à 500.000 nm et ledit filtre (23) est en une association étanche sous pression avec le lit de résine (19) suffisante pour empêcher la fuite d'eau provoquée par l'élévation de la pression interne, et l'écoulement de l'eau à travers le filtre (23) est empêché par les bactéries accumulées sortant du lit (19) lorsque ce dernier s'épuise.

2. Appareil selon la revendication 1, dans lequel le filtre a un diamètre moyen des pores de 0,22 à 0,45 $\mu$m.

3. Appareil selon la revendication 1 ou 2 dans lequel la résine échangeuse d'ions a un diamètre moyen des pores de 10.000 nm à 400.000 nm.

4. Appareil selon l'une quelconque des revendications précédentes dans lequel le récipient contient également un lit de charbon activé.

5. Procédé pour l'élimination de bactéries d'un liquide les contenant, comprenant le passage du liquide à travers un lit de résine échangeuse d'anions macroréticulaire capable d'éliminer les bactéries du liquide, et le passage de l'effluent du lit à travers un filtre ayant une taille moyenne des pores submicronique ayant un diamètre moyen des pores d'au moins 0,03 $\mu$m et un diamètre maximal des pores de 1 $\mu$m, caractérisé en ce que la résine a un diamètre moyen des pores de 8.000 à 500.000 nm, et le filtre et le lit sont maintenus en relation étanche sous pression et le filtre et la résine sont tels que, lorsque la capacité d'élimination des bactéries de la résine s'épuise, les bactéries atteignent le filtre pour, finalement, le colmater et élever la pression à une valeur telle que le débit du liquide quittant le filtre soit fortement réduit pour fournir une indication d'arrêter le passage du liquide dans le lit.

6. Procédé selon la revendication 5 dans lequel le filtre a un diamètre moyen des pores de 0,22 à 0,45 $\mu$m.

7. Procédé selon la revendication 5 ou 6 dans lequel le liquide traverse le charbon activé avant de traverser le filtre.

8. Procédé selon l'une quelconque des revendications 5 à 7 dans lequel la résine échangeuse d'ions a un diamètre moyen des pores de 10.000 nm à 400.000 nm.

**Patentansprüche**

1. Vorrichtung zur Entfernung von Bakterien aus einem flüssigen Medium aus einem Behälter für ein Ionenaustauscherharz, wobei der Behälter einen Flüssigkeitsein- und -auslaß aufweist, ein Bett aus einem makroretikularen Anionaustauscherharz in dem Behälter vorgesehen ist und an der Seite des Ionenaustauscherharzbettes, die bei der Verwendung die an dem abgeführten Strom liegende Stelle ist, ein Filter mit einer-Submikrondurchschnittsporengröße mit einem durchschnittlichen Durchmesser von wenigstens 0,03 $\mu$m und einem maximalen Porendurchmesser von 1 $\mu$m angeordnet ist, dadurch gekennzeichnet, daß das Ionenaustauscherharz (19) einen durchschnittlichen Porendurchmesser von 8000 bis 500000 nm besitzt und das Filter (23) druckdicht mit dem Harzbett (19) derart verbunden ist, daß ein Austreten von Wasser, verursacht durch das Entstehen eines Innendrucks verhindert wird, und das Filter (23) den Wasserstrom durch gesammelte Bakterien blockiert, die aus dem Bett (19) austreten, wenn dieses erschöpft ist.

2. Vorrichtung nach Anspruch 1, dadurch gekennzeichnet, daß das Filter einen durchschnittlichen Porendurchmesser von 0,22 bis 0,45 $\mu$m aufweist.

3. Vorrichtung nach Anspruch 1 oder 2, dadurch gekennzeichnet, daß das Ionenaustauscherharz einen durchschnittlichen Porendurchmesser von 10000 nm bis 400000 nm aufweist.

4. Vorrichtung nach einem der vorhergehenden Ansprüche dadurch gekennzeichnet, daß der Behälter außerdem ein Bett aus Aktivkohle enthält.

5. Verfahren zur Entfernung von Bakterien aus einer Bakterien enthaltenden Flüssigkeit durch Durchleiten der Flüssigkeit durch ein Bett aus einem makroretikularen Ionenaustauscherharz, das Bakterien aus der Flüssigkeit zu entfernen vermag, und durch Weiterleiten des Ablaufs aus dem Bett durch ein Filter mit einer durchschnittlichen Porengröße im Submikronbereich sowie mit einem durchschnittlichen Porendurchmesser von wenigsten 0,03 $\mu$m und einem maximalen Porendurchmesser von 1 $\mu$m, dadurch gekennzeichnet, daß das eingesetzte Harz einen durchschnittlichen Porendurchmesser von 8000 bis 500000 nm besitzt und das Filter und das Bett druckdicht gehalten werden, und das Filter und das Harz derart sind, daß dann, wenn die Kapazität des Harzes bezüglich der Entfernung von Bakterien erschöpft wird, Bakterien in das Filter gelangen und dieses gegebenenfalls blockieren, wodurch der Druck in einem solchen Ausmaß ansteigt, daß der Flüssigkeitsstrom, der das Filter verläßt erheblich vermindert wird, wodurch ein Hinweis dahingehend gegeben wird, mit der Zufuhr von Flüssigkeit zu dem Bett aufzuhören.

6. Verfahren nach Anspruch 5 gekennzeichnet, daß das eingesetzte Filter eine durchschnittliche Porendurchmessergröße von 0,22 bis 0,45 $\mu$m besitzt.

7. Verfahren nach Anspruch 5 oder 6, dadurch gekennzeichnet, daß die Flüssigkeit durch Aktivkohle vor dem Durchschicken durch das Filter geschickt wird.

8. Verfahren nach einem der Ansprüche 5 bis 7, dadurch gekennzeichnet, daß das eingesetzte Ionenaustauscherharz einen durchschnittlichen Porendurchmesser von 10000 nm bis 400000 nm besitzt.

*Fig.1.*

*Fig.2.*

Fig.2.

Fig.3.

Fig.4.

% LEAKAGE THROUGH RESIN

BACK PRESSURE.

E. COLI CHALLENGE

THOUSANDS OF GALLONS PER CUBIC FOOT OF RESIN

X 10³